# EUROPEAN PATENT APPLICATION

(11) **EP 4 164 000 A1**
(43) Date of publication of application: **12.04.2023**
(21) Application number: 22768602.9
(22) Date of filing: 15.03.2022
(51) Int. Cl.: H01M 4/36, H01M 4/587, H01M 4/62, H01M 10/0525, C01B 32/00

(54) **HARD CARBON COMPOSITE MATERIAL, PREPARATION METHOD THEREFOR, AND USE THEREOF**

(30) Priority: 26.08.2021 CN 202110990791
(71) Applicant: SVOLT ENERGY TECHNOLOGY CO., LTD, Changzhou, Jiangsu 213200 (CN)
(72) Inventor: ZHAO, Xiaofeng, Changzhou Jiangsu 213200 (CN)
(74) Representative: Puchberger & Partner Patentanwälte
(86) International application number: PCT/CN2022/080885
(87) International publication number: WO 2023/024488

(57) **Abstract**

The present disclosure relates to the technical field of lithium-ion batteries, in particular to a hard carbon composite material and a preparation method and use thereof. The hard carbon composite material of the present disclosure has a core-shell structure. The core comprises hard carbon doped with nitrogen, and the shell comprises a phosphorus-containing compound. The core accounts for 1 %-10% of the shell by mass. In the present disclosure, the core of the hard carbon composite material is doped with nitrogen to increase the conductivity of the composite material; the shell of the hard carbon composite material is doped with the phosphorus-containing compound to improve the specific capacity and initial efficiency of the composite material by relying on the high specific capacity of phosphorus, and meanwhile, by coating the shell with the phosphorus-containing compound, the specific surface area of the porous structure of the core is reduced and thus the overall specific surface area of the hard carbon composite material is reduced. By combining the core with the shell, the obtained hard carbon composite material has excellent electrochemical properties.

## Description

### CROSS REFERENCE TO RELATED APPLICATIONS

This application claims priority to Chinese Patent Application No. 2021109907917, filed to China National Intellectual Property Administration on August 26, 2021 and entitled "Hard Carbon Composite Material and Preparation Method and Use Thereof", the entire contents of which are incorporated herein by reference.

### TECHNICAL FIELD

The present disclosure relates to the technical field of lithium-ion batteries, in particular to a hard carbon composite material and a preparation method and use thereof.

### BACKGROUND

Hard carbon, which is pyrolytic carbon obtained by pyrolyzing a polymer, is nongraphitizable. Due to the interlaced layered structure of the hard carbon, lithium ions can be intercalated into and deintercalated from the hard carbon from various angles, which thereby greatly increases the charging/discharging speed. Compared with graphite materials, the low-temperature performance and rate performance of the hard carbon are also significantly improved. However, hard carbon materials generally have low specific capacity and low initial efficiency, and also have the defects of excessively high electrode potential, voltage delay, high initial irreversible capacity, etc., which limit their large-scale application. Modification by doping is one of the measures to increase the specific capacity and reduce the impedance of the material. However, the hard carbon modified materials in the prior art have the problems that the rate increase is small, the voltage plateau is high, the initial efficiency is low, and the cycling performance needs to be improved.

Therefore, how to improve the rate performance, initial efficiency and cycle performance of the hard carbon materials is an urgent problem to be solved at present.

### SUMMARY

The present disclosure provides a hard carbon composite material. The hard carbon composite material has a core-shell structure. The core of the hard carbon composite material comprises hard carbon doped with nitrogen, and the shell of the hard carbon composite material comprises a phosphorus-containing compound;
the core accounts for 1%-10% of the shell by mass.

In one embodiment, the core and the shell are linked by a chemical bond.

In one embodiment, the hard carbon composite material has a particle size of 5-20 µm.

In one embodiment, the core is prepared from a resinous raw material, a nitrogen source, an additive and a solvent A in a mass ratio of 100:(1-10):(0.5-2):(100-500).

In one embodiment, the nitrogen source comprises at least one of ammonia water, aniline and pyrrole.

In one embodiment, the additive comprises at least one of sodium bicarbonate, ammonium bicarbonate, sodium carbonate and ammonium carbonate.

In one embodiment, the resinous raw material comprises at least one of a phenolic resin, an epoxy resin and a furfural resin.

In one embodiment, the solvent A comprises ethanol and water.

In one embodiment, the shell is prepared from an alkaline phosphorus salt compound, a binder and a solvent B in a mass ratio of 100:(5-20):(1000-5000).

In one embodiment, the alkaline phosphorus salt compound comprises at least one of melamine cyanurate, pentaerythritol melamine phosphate, ammonium polyphosphate and melamine pyrophosphate.

In one embodiment, the solvent B comprises at least one of ethanol, cyclohexane, carbon tetrachloride, benzene, toluene, N-methylpyrrolidone and acetone.

In one embodiment, the binder comprises at least one of polyvinylidene fluoride, styrene-butadiene rubber, an LA132 binder, an LA133 binder and an LA136D binder.

The present disclosure further provides a preparation method of the hard carbon composite material, comprising the following steps:
carbonizing a mixture of an alkaline phosphorus salt compound, a binder, a solvent B and a core precursor material;
a preparation method of the core precursor material comprises: grinding and drying a mixture of a resinous raw material, a nitrogen source, an additive and a solvent A, and heating the dried product in an oxygen-containing atmosphere.

In one embodiment, the heating is carried out at a temperature of 100-300°C for a time of 1-24 h.

In one embodiment, the grinding is ball milling, and the ball milling is carried out for a time of 1-24 h.

In one embodiment, the carbonizing is carried out at a temperature of 900-1400°C for a time of 1-24 h.

In one embodiment, before the carbonizing, the method further comprises drying the mixture of the alkaline phosphorus salt compound, the binder, the solvent B and the core precursor material.

In one embodiment, the drying is spray-drying.

In one embodiment, a preparation method of the mixture of the alkaline phosphorus salt compound, the binder, the solvent B and the core precursor material specifically comprises the following steps: dispersing the alkaline phosphorus salt compound, the binder and the solvent B to obtain a mixed slurry, and uniformly mixing the mixed slurry with the core precursor material;
in one embodiment, the dispersing is carried out at a speed of 1-100 m/s for a time of 10-120 min.

In one embodiment, the mixed slurry has a solid content of 1%-5%.

The present disclosure further provides a negative electrode, comprising the hard carbon composite material.

The present disclosure further provides a lithium-ion battery, comprising the negative electrode.

### BRIEF DESCRIPTION OF THE DRAWINGS

In order to more clearly illustrate the technical solutions of the embodiments of the present disclosure, the accompanying drawings that need to be used in the embodiments will be briefly described below. It should be understood that the following accompanying drawings merely represent the embodiments of the present disclosure by way of example, and the dimensional scales in the drawings do not directly correspond to the true scales of the embodiments. The following accompanying drawings illustrate only certain embodiments of the present disclosure, and therefore should not be regarded as limiting the scope.

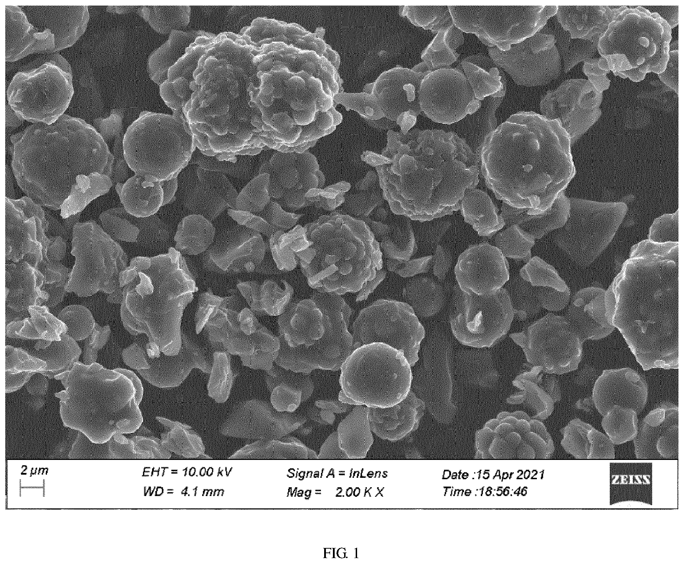

FIG. 1 is an SEM image of a hard carbon composite material prepared in Example 1 in accordance with the present disclosure.

### DETAILED DESCRIPTION

The advantages of the embodiments in the summary will be set forth in the Detailed Description of the description below, and in part will be obvious from the description, or can be obtained by some of the examples of the present disclosure.

The technical solutions of the present disclosure will be further described below with reference to the accompanying drawings and through some embodiments.

In order to make the objects, technical solutions and advantages of the present disclosure clearer, the present disclosure will be further described in detail below with reference to the accompanying drawings and embodiments. It should be understood that the examples described herein are merely illustrative of the present disclosure and are not intended to limit the present disclosure. Further, the technical features involved in the embodiments of the present disclosure described below can be combined with each other as long as they do not conflict with each other. Several improvements and modifications can also be made without departing from the principle of the examples of the present disclosure, and these improvements and modifications should also be regarded as falling into the protection scope of the examples of the present disclosure.

An embodiment provides a hard carbon composite material. The hard carbon composite material has a core-shell structure. The core of the hard carbon composite material comprises hard carbon doped with nitrogen, and the shell of the hard carbon composite material comprises a phosphorus-containing compound;
the core accounts for 1%-10% of the shell by mass.

In this embodiment, the core of the hard carbon composite material is doped with the nitrogen to improve the conductivity of the composite material. Moreover, a porous structure of the core can store more lithium ions to increase the specific capacity, and the porous structure can also store more electrolyte to improve the cycling performance and rate performance of the hard carbon composite material. The shell is doped with the phosphorus-containing compound to improve the specific capacity and initial efficiency of the material by relying on the high specific capacity of phosphorus, and meanwhile, by coating the shell with the phosphorus-containing compound, the specific surface area of the porous structure of the core is reduced and thus the overall specific surface area of the hard carbon composite material is also reduced. That is, by means of the core-shell combination structure, the electrochemical performance of the composite material can be further improved.

In some embodiments, the core accounts for 1%-10%, which can also be 2%, 2.5%, 3%, 3.5%, 4%, 4.5%, 5%, 5.5%, 6%, 6.5%, 7%, 7.5%, 8%, 8.5%, 9% or 9.5%, of the shell by mass.

In some embodiments, the core and the shell are linked by a chemical bond. The core and the shell of the hard carbon composite material are linked by the chemical bond, so that the impedance and charging/discharging voltage plateau of the hard carbon composite material are reduced, and the specific capacity of the composite material is indirectly increased.

In some embodiments, the hard carbon composite material has a particle size of 5-20 µm. In one embodiment, the particle size of the hard carbon composite material includes, but is not limited to, 6 µm, 7 µm, 8 µm, 9 µm, 10 µm, 11 µm, 12 µm, 13 µm, 14 µm, 15 µm, 16 µm, 17 µm, 18 µm or 19 µm.

In some embodiments, the core is prepared from a resinous raw material, a nitrogen source, an additive and a solvent A in a mass ratio of 100:(1-10):(0.5-2):(100-500). In one embodiment, the mass ratio of the resinous raw material to the nitrogen source to the additive to the solvent A includes, but is not limited to, 100:1:0.5:100, 100:3:0.7:200, 100:5:1:300, 100:7:1.5:400 or 100:10:2:500.

In some embodiments, the nitrogen source comprises at least one of ammonia water, aniline and pyrrole. The precursor (i.e., the nitrogen source) of the nitrogen doped in the core can be any one of or a combination of more of ammonia water, aniline and pyrrole.

In some embodiments, the additive comprises at least one of sodium bicarbonate, ammonium bicarbonate, sodium carbonate and ammonium carbonate. At least one of the sodium bicarbonate, the ammonium bicarbonate, the sodium carbonate and the ammonium carbonate is used as a pore forming agent, so that the core of the hard carbon composite material has a porous structure.

In some embodiments, the resinous raw material comprises at least one of a phenolic resin, an epoxy resin and a furfural resin. Any one or more of the above resin materials are used as the carbon source to provide the core skeleton.

In some embodiments, the solvent A comprises ethanol and water.

In some embodiments, a volume ratio of the ethanol to the water is (0.8-1):(0.8-1).

In some embodiments, the shell is prepared from an alkaline phosphorus salt compound, a binder and a solvent B in a mass ratio of 100:(5-20):(1000-5000). In one embodiment, the mass ratio of the alkaline phosphorus salt compound to the binder to the solvent B can also be 100:5:1000, 100:10:2000, 100:15:3500 or 100:20:5000.

In some embodiments, the alkaline phosphorus salt compound comprises at least one of melamine cyanurate, pentaerythritol melamine phosphate, ammonium polyphosphate and melamine pyrophosphate. One or a combination of more of the melamine cyanurate, the pentaerythritol melamine phosphate, the ammonium polyphosphate and the melamine pyrophosphate is used to provide the phosphorus-containing compound of the shell, so that the specific capacity and initial efficiency of the composite material are improved.

In some embodiments, the solvent B comprises at least one of ethanol, cyclohexane, carbon tetrachloride, benzene, toluene, N-methylpyrrolidone and acetone. In one embodiment, the solvent B can be one of the solvents above, a combination of ethanol and cyclohexane, a combination of carbon tetrachloride, toluene and N-methylpyrrolidone, or the like.

In some embodiments, the binder comprises at least one of polyvinylidene fluoride, styrene-butadiene rubber, an LA132 binder, an LA133 binder and an LA136D binder. In one embodiment, the binder can be any one of the above, a combination of polyvinylidene fluoride and styrene-butadiene rubber, or the like.

An embodiment provides a preparation method of the hard carbon composite material, comprising the following steps:
carbonizing a mixture of an alkaline phosphorus salt compound, a binder, a solvent B and a core precursor material;
a preparation method of the core precursor material comprises: grinding and drying a mixture of a resinous raw material, a nitrogen source, an additive and a solvent A, and heating the dried product in an oxygen-containing atmosphere.

The preparation method of the hard carbon composite material provided by the present disclosure is simple and feasible. The mixture of the resinous raw material, the nitrogen source, the additive and the solvent A is ground, dried and heated in the oxygen-containing atmosphere to obtain the core precursor material. Then the core precursor material is mixed with the alkaline phosphorus salt compound, the binder and the solvent B to obtain the mixture, and the mixture is further carbonized to obtain the hard carbon composite material. In the hard carbon composite material obtained by the above method, the interior of the resin matrix material is doped with nitrogen to reduce the impedance, and the surface of the resin matrix material is coated with the phosphorus-containing compound to increase the specific capacity of the material, thereby improving the energy density and rate performance of the composite material.

In some embodiments, the heating is carried out at a temperature of 100-300°C for a time of 1-24 h. In one embodiment, the temperature of the heating includes, but is not limited to, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C or 290°C. The time of the heating includes, but is not limited to, 2 h, 3 h, 4 h, 5 h, 6 h, 7 h, 8 h, 9 h, 10 h, 11 h, 12 h, 13 h, 14 h, 15 h, 16 h, 17 h, 20 h or 22 h.

In some embodiments, in the heating process, oxygen is introduced at a flow rate of 4-6 mL/min. In one embodiment, the flow rate at which the oxygen is introduced includes, but is not limited to, 4.2 mL/min, 4.5 mL/min, 4.7 mL/min, 5 mL/min, 5.2 mL/min, 5.5 mL/min, 5.7 mL/min or 6mL/min.

In some embodiments, the grinding is ball milling, and the ball milling is carried out for a time of 1-24 h. The ball milling is carried out at a speed of 40-60 rpm. In one embodiment, the time of the ball milling can also be 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, 21 h, 22 h or 23 h. The speed of the ball milling includes, but is not limited to, 45 rpm, 50 rpm or 55 rpm.

In the present disclosure, the resinous raw material, the nitrogen source, the additive and the solvent A are uniformly mixed, and then transferred into a ball mill for wet ball milling. In this way, the components are uniformly mixed, and the obtained core structure can be uniformly doped with nitrogen, so that the conductivity of the composite material is increased.

In some embodiments, the carbonizing is carried out at a temperature of 900-1400°C for a time of 1-24 h. By adopting suitable carbonizing temperature and time, the hard carbon composite material with excellent conductivity and suitable porous structure can be obtained, thereby improving the specific capacity and cycling performance of the lithium-ion battery.

In one embodiment, the temperature of the carbonizing includes, but is not limited to, 950°C, 970°C, 1000°C, 1020°C, 1050°C, 1070°C, 1100°C, 1120°C, 1150°C, 1170°C, 1200°C, 1220°C, 1250°C, 1270°C, 1300°C, 1320°C, 1350°C, 1370°C or 1400°C. In one embodiment, the time of the carbonizing includes, but is not limited to, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, 21 h, 22 h or 23 h.

In one embodiment, before the carbonizing, the method further comprises drying the mixture of the alkaline phosphorus salt compound, the binder, the solvent B and the core precursor material. In one embodiment, the drying is spray-drying.

In the present disclosure, the mixture of the alkaline phosphorus salt compound, the binder, the solvent B and the core precursor material is first spray-dried and pulverized, and then carbonized in the inert atmosphere to obtain the hard carbon composite material. The inert atmosphere comprises argon, helium or neon, etc.

In one embodiment, a preparation method of the mixture of the alkaline phosphorus salt compound, the binder, the solvent B and the core precursor material specifically comprises the following steps: dispersing the alkaline phosphorus salt compound, the binder and the solvent B to obtain a mixed slurry, and uniformly mixing the mixed slurry with the core precursor material.

In the present disclosure, the alkaline phosphorus salt compound, the binder and the solvent B are first dispersed at a high speed to be fully and uniformly mixed, and then uniformly mixed with the core precursor material.

In one embodiment, the dispersing is carried out at a speed of 1-100 m/s for a time of 10-120 min. With the suitable dispersing speed and time, a good dispersion effect can be obtained. In one embodiment, the speed of the dispersing includes, but is not limited to 5m/s, 10m/s, 15m/s, 20m/s, 30m/s, 40m/s, 50m/s, 60m/s, 70m/s, 80m/s or 90m/s. The time of the dispersing includes, but is not limited to, 20 min, 30 min, 40 min, 50 min, 60 min, 70 min, 80 min, 90 min, 100 min or 110 min.

In one embodiment, the mixed slurry has a solid content of 1%-5%. In one embodiment, the solid content of the mixed slurry includes, but is not limited to, 1.5%, 2%, 2.5%, 3%, 3.5%, 4% or 4.5%.

An embodiment provides a negative electrode, comprising the hard carbon composite material as described above.

The hard carbon composite material in the present disclosure can be used alone as a negative electrode material of the lithium-ion battery, or used in combination with other negative electrode materials to prepare the negative electrode. The negative electrode comprising the hard carbon composite material in the present disclosure can impart high specific capacity and initial efficiency to the lithium-ion battery.

An embodiment provides a lithium-ion battery, comprising the negative electrode as described above.

The lithium-ion battery has excellent specific capacity, initial efficiency, rate performance and cycling performance.

### Examples

The following are typical but non-limiting examples of the present disclosure:

### Example 1

A preparation method of a hard carbon composite material comprised the following steps:
(a) 100 g of phenolic resin, 5 g of ammonia water and 1 g of sodium carbonate were added to 300 g of mixture of ethanol and deionized water (the volume ratio of the ethanol to the deionized water being 1:1), and the resulting mixture was stirred uniformly, transferred into a ball mill for wet ball milling at a speed of 50 rpm for 12 h, and then dried to obtain a precursor material A;
   in an oxygen-containing atmosphere where oxygen was introduced at a flow rate of 5 mL/min, the precursor material A was heated to 200°C and held for 12 h to obtain a core precursor material;
(b) 100 g of melamine cyanurate, 10 g of LA133 binder and 3000 g of N-methylpyrrolidone were taken and made into a solution, and the solution was dispersed by a high-speed dispersing machine at a speed of 50 m/s for 60 min to obtain a mixed slurry;
(c) 500 g of the core precursor material was taken and added to the mixed slurry, and after being stirred uniformly, the mixture was spray-dried, pulverized and then carbonized in an argon inert atmosphere at a temperature of 1200°C for 12 h to obtain the hard carbon composite material.

### Example 2

A preparation method of a hard carbon composite material comprised the following steps:
(a) 100 g of epoxy resin, 1 g of aniline and 0.5 g of ammonium bicarbonate were added to 100 mL of mixture of ethanol and deionized water (the volume ratio of the ethanol to the deionized water being 1:1), and the resulting mixture was stirred uniformly, and transferred into a ball mill for wet ball milling at a speed of 50 rpm for 1 h, and then dried to obtain a precursor material A;
   in an oxygen-containing atmosphere where oxygen was introduced at a flow rate of 5 mL/min, the precursor material A was heated to 100°C and held for 24 h to obtain a core precursor material;
(b) 100 g of pentaerythritol melamine phosphate, 5 g of polyvinylidene fluoride and 1000 mL of carbon tetrachloride were taken and made into a solution, and the solution was dispersed by a high-speed dispersing machine at a speed of 10 m/s for 120 min to obtain a mixed slurry;
(c) 1000 g of the core precursor material was taken and added to the mixed slurry, and after being stirred uniformly, the mixture was spray-dried, pulverized and then carbonized in an inert atmosphere at a temperature of 900°C for 24 h to obtain the hard carbon composite material.

### Example 3

A preparation method of a hard carbon composite material comprised the following steps:
(a) 100 g of furfural resin, 10 g of pyrrole and 2 g of ammonium carbonate were added to 500 mL of mixture of ethanol and deionized water (the volume ratio of the ethanol to the deionized water being 1:1), and the resulting mixture was stirred uniformly, transferred into a ball mill for wet ball milling at a speed of 50 rpm for 24 h, and then dried to obtain a precursor material A;
   in an oxygen-containing atmosphere where oxygen was introduced at a flow rate of 5 mL/min, the precursor material A was heated to 300°C and held for 1 h to obtain a core precursor material;
(b) 100 g of ammonium polyphosphate, 20 g of styrene-butadiene rubber and 5000 mL of acetone were taken and made into a solution, and the solution was dispersed by a high-speed dispersing machine at a speed of 100 m/s for 10 min to obtain a mixed slurry;
(c) the core precursor material was added to the mixed slurry, and after being stirred uniformly, the mixture was spray-dried, pulverized and then carbonized in an argon inert atmosphere at a temperature of 1400°C for 1 h to obtain the hard carbon composite material.

### Comparative Example 1

100 g of phenolic resin and 25 g of ethanol were mixed and stirred uniformly. Then a reaction was carried out at a temperature of 180°C for 6 h. Then, the resulting mixture was ground into powder by a ball mill. The powder was put into a tube furnace. While introducing an inert gas, i.e. argon, the powder was heat-treated was at 1400°C for 2 h so as to be cracked and carbonized, thereby obtaining the hard carbon composite material.

### Experimental Example

### 1. SEM testing

FIG. 1 is an SEM image of a hard carbon composite material prepared in Example 1. As can be seen from the figure, the material exhibits a granular structure with uniform size distribution, and has a particle size of 5-20 µm.

### 2. Testing on physicochemical properties of core precursor material

According to the national standard GBT-245332009 "Graphite Negative Electrode Materials for Lithium Ion Battery", the specific surface area and pore volume distribution of the core precursor materials in Examples 1-3 were tested. The results are shown in Table 1.

**Table 1 Physicochemical properties of core precursor material**

| Examples and Comparative Example | Specific surface area (m²/g) | | |
|---|---|---|---|
| | Total specific surface area | Micropore | Mesopore |
| Example 1 | 207.7 | 106.83 | 100.87 |
| Example 2 | 187.1 | 107.83 | 79.27 |
| Example 3 | 176.4 | 108.83 | 67.57 |
| Comparative Example 1 | 38.9 | 18.53 | 20.37 |

As can be seen from Table 1, the core precursor materials obtained in Examples 1-3 in the present disclosure had better specific surface area than that in Comparative Example 1, because the pore forming agent was used in the precursor material to increase the specific surface area and porosity of the material.

### 3. Testing on button cells:

### (1) Testing on physicochemical properties and button cells:

The hard carbon composite materials prepared in Examples 1-3 and Comparative Example 1 were tested for their particle size, true density, tap density, specific surface area, ash content and specific capacity.

For the test methods, reference is made to GBT-245332009 "Graphite Negative Electrode Materials for Lithium Ion Battery":
The hard carbon composite materials obtained in Examples 1-3 and Comparative Example 1 were assembled into button cells A1, A2, A3 and B1 respectively. The preparation method comprised: a binder, a conductive agent and a solvent were added to the negative electrode material and stirred to obtain a slurry, and the slurry was applied onto copper foil, dried and rolled to obtain a button cell. The binder used was an LA132 binder, the conductive agent was SP, the negative electrode material was respectively the hard carbon composite materials obtained in Examples 1-3 and Comparative Example 1, and the solvent was redistilled water. The negative electrode material, the conductive agent SP, the LA132 binder and the redistilled water in a usage ratio of 95 g: 1 g: 4 g: 220 mL were made into the negative electrode plate. The electrolyte was LiPF₆, EC and DEC (the volume ratio of EC to DEC was 1:1, and the concentration of LiPF₆ was 1.3 mol/L). A lithium plate was adopted as the counter electrode. The separator was a polyethylene (PE), polypropylene (PP) or polyethylene-propylene (PEP) composite film. The dummy cell was assembled in an argon-filled glove box. The electrochemical properties were tested on a LAND CT2001A battery tester (Wuhan). The charging/discharging voltage was in a range of 0.005V-2.0V, and the charging/discharging rate was 0.1 C. The button cells were tested for their rate performance (3 C, 0.1 C) and cycling performance (0.5 C/0.5 C, 200 cycles). The test data are shown in Table 2:

**Table 2 Comparison of physicochemical parameters and properties**

| Item | Example 1 | Example 2 | Example 3 | Comparative Example 1 |
|---|---|---|---|---|
| Particle size (D50, µm) | 12.6 | 11.1 | 12.7 | 9.9 |
| True density (g/cm³) | 2.16 | 2.18 | 2.20 | 1.94 |
| Tap density (g/cm³) | 1.08 | 1.05 | 1.03 | 0.90 |
| Ash content (%) | 0.05 | 0.04 | 0.06 | 0.09 |
| Initial discharge capacity (mAh/g) | 598 | 586 | 579 | 395 |
| Initial efficiency (%) | 89.5 | 89.4 | 89.1 | 83.3 |
| Rate performance (3 C/0.1 C) | 97.5 | 96.6 | 97.1 | 90.3 |
| Cycling performance (Capacity retention)/% | 98.8 | 98.7 | 98.3 | 94.3 |

As can be seen from Table 2, the hard carbon materials prepared in Examples 1-3 had high specific capacity and initial efficiency. This was because the phosphorus-containing compound doped in the hard carbon composite material could increase the specific capacity of the hard carbon composite material, and the formed pore structure accommodated the lithium salt so as to reduce the irreversible capacity of the material and improve the initial efficiency of the material. Also, the nitrogen contained in the material could increase the electronic conductivity of the material, thereby improving the rate performance and cycling performance of the material.

### Industrial applicability

Based on the above, the present disclosure provides a hard carbon composite material and a preparation method and use thereof. In the hard carbon composite material, the hard carbon core doped with nitrogen and the shell comprising the phosphorus-containing compound are combined to improve the specific capacity and rate performance of the composite material. The preparation method of the hard carbon composite material is simple and feasible. The obtained composite material has excellent conductivity and can improve the cycling performance and rate performance of the lithium-ion battery.

## Claims

1. A hard carbon composite material, wherein the hard carbon composite material has a core-shell structure, the core of the hard carbon composite material comprising hard carbon doped with nitrogen, and the shell of the hard carbon composite material comprising a phosphorus-containing compound; and
the core accounts for 1%-10% of the shell by mass.

2. The hard carbon composite material according to claim 1, comprising at least one of the following features (1)-(2):
(1) the core and the shell are linked by a chemical bond; and
(2) the hard carbon composite material has a particle size of 5-20 µm.

3. The hard carbon composite material according to claim 1 or 2, comprising at least one of the following features (1)-(5):
(1) the core is prepared from a resinous raw material, a nitrogen source, an additive and a solvent A in a mass ratio of 100:(1-10):(0.5-2):(100-500);
(2) the nitrogen source comprises at least one of ammonia water, aniline and pyrrole;
(3) the additive comprises at least one of sodium bicarbonate, ammonium bicarbonate, sodium carbonate and ammonium carbonate;
(4) the resinous raw material comprises at least one of a phenolic resin, an epoxy resin and a furfural resin; and
(5) the solvent A comprises ethanol and water.

4. The hard carbon composite material according to any of claims 1-3, comprising at least one of the following features (1)-(4):
(1) the shell is prepared from an alkaline phosphorus salt compound, a binder and a solvent B in a mass ratio of 100:(5-20):(1000-5000);
(2) the alkaline phosphorus salt compound comprises at least one of melamine cyanurate, pentaerythritol melamine phosphate, ammonium polyphosphate and melamine pyrophosphate;
(3) the solvent B comprises at least one of ethanol, cyclohexane, carbon tetrachloride, benzene, toluene, N-methylpyrrolidone and acetone; and
(4) the binder comprises at least one of polyvinylidene fluoride, styrene-butadiene rubber, an LA132 binder, an LA133 binder and an LA136D binder.

5. A preparation method of the hard carbon composite material according to any of claims 1-4, comprising the following steps:
carbonizing a mixture of an alkaline phosphorus salt compound, a binder, a solvent B and a core precursor material; wherein
a preparation method of the core precursor material comprises: grinding and drying a mixture of a resinous raw material, a nitrogen source, an additive and a solvent A, and heating the dried product in an oxygen-containing atmosphere.

6. The preparation method of the hard carbon composite material according to claim 5, comprising at least one of the following features (1)-(2):
(1) the heating is carried out at a temperature of 100-300°C for a time of 1-24 h; and
(2) the grinding is ball milling, and the ball milling is carried out for a time of 1-24 h.

7. The preparation method of the hard carbon composite material according to claim 5 or 6, comprising at least one of the following features (1)-(3):
(1) the carbonizing is carried out at a temperature of 900-1400°C for a time of 1-24 h;
(2) before the carbonizing, the method further comprises drying the mixture of the alkaline phosphorus salt compound, the binder, the solvent B and the core precursor material; and
(3) the drying is spray-drying.

8. The preparation method of the hard carbon composite material according to any of claims 5-7, comprising at least one of the following features (1)-(3):
(1) a preparation method of the mixture of the alkaline phosphorus salt compound, the binder, the solvent B and the core precursor material specifically comprises the following steps: dispersing the alkaline phosphorus salt compound, the binder and the solvent B to obtain a mixed slurry, and uniformly mixing the mixed slurry with the core precursor material;
(2) the dispersing is carried out at a speed of 1-100 m/s for a time of 10-120 min; and
(3) the mixed slurry has a solid content of 1%-5%.

9. A negative electrode, comprising the hard carbon composite material according to any of claims 1-4.

10. A lithium-ion battery, comprising the negative electrode according to claim 9.
